# EUROPEAN PATENT SPECIFICATION

(11) **EP 2 281 943 B1**
(45) Date of publication and mention of the grant of the patent: **07.08.2019**
(21) Application number: 10166639.4
(22) Date of filing: 21.06.2010
(51) Int. Cl.: E01B 5/16, E01B 9/00, E01B 26/00, B61L 1/02, B61L 3/12, F16B 5/02, F16B 37/00

(54) **Equipment mounting assembly**
Ausrüstungsmontageanordnung
Ensemble de montage d'équipement

(30) Priority: 22.06.2009 GB 0910731
(43) Date of publication of application: 09.02.2011
(73) Proprietor: Pandrol (Vortok) Limited, Addlestone, Surrey KT15 2AR (GB)
(72) Inventor: Stokowski, Marcin, Exeter, Devon EX2 7TN (GB); Bointon, Richard, Yealmpton, Devon PL8 2JX (GB)
(74) Representative: Haseltine Lake Kempner LLP

(56) References cited:
- DE-U1- 20 116 007
- FR-A1- 2 885 916
- US-A- 3 877 640
- US-A- 5 314 115
- US-A1- 2005 001 048

## Description

The present invention relates to an assembly for mounting equipment to rail track.

Automatic train protection systems employ devices known as balises mounted to rail track to transmit data to the train in response to a radio signal. The transmitted data may include information about speed restrictions, gradients, and other details about the approaching track. Other equipment such as beacons, sensors, transponders, or magnets, may be mounted to rail track.

It is possible to mount equipment directly to the rail foundation, such as disclosed in FR2885916A1. This can be time-consuming, particularly in a case where holes have to be drilled into concrete sleepers. The time-consuming nature of mounting equipment in this way also leads to a lack of flexibility as it requires more time to move, replace, or remove the equipment.

DE 201 16007 U1 discloses an equipment mounting assembly for mounting safety barriers alongside rail track. The assembly comprises a beam, distinct from the rail foundations on which the rails are supported, to which beam equipment can be mounted. The beam is supported underneath both rails.

According to the present invention, an equipment mounting assembly is provided for mounting equipment to rail track, the rail track having first and second rails to which the equipment is to be mounted, the rails running parallel to one another and being supported on rail foundations. The assembly comprises a beam for connection to both rails, to which beam the equipment can be mounted. The assembly also comprises first and second holding means for holding the beam in position relative to the rails, the first and second holding means being configured to support the beam beneath the rails in an arrangement in which the beam resides in a space between two adjacent rail foundations. The assembly further comprises first and second anti-vibrational pads for location at each end of the beam, each of the first and second anti-vibrational pads having a portion, which is depressed with respect to the rest of the pad, and further portions which extend beyond the edges of the foot of the corresponding rail when the pad is in position beneath the rail so that the depressed portion of the pad lies between an upper face of the beam and a foot of a corresponding one of the rails, and each of the holding means is adapted to bear onto an associated one of the anti-vibrational pads.

Advantageously, the assembly can connect to both rails, which makes the mounting very robust when subject to off-centre loads. Significant twisting loads which can be exerted on the rail by connecting a mass to a single rail are thereby avoided.

The equipment in question could be, for example, a component such as a balise, a beacon, a sensor, a transponder, or a magnet, but embodiments of the invention are not limited to mounting such components, and those skilled in the art will appreciate that the assembly is suitable for mounting a vast array of equipment.

Equipment can be attached to the beam between the rails, or the beam can be of sufficient length that equipment can be attached to the beam at a position outside of the space between the two rails. In the latter case, the beam effectively cantilevers the equipment. The beam attaches to both rails, which provides a stable platform to attach equipment to any part of the beam.

An assembly for mounting equipment to rail track in which the beam is supported underneath the rail enables the beam to reside in the space between two sleepers, the crib. This has the advantage that it allows rail authorities to overcome potential conflicts between distinct departments responsible for different elements of track maintenance. In embodiments of the present invention, the fact that the beam is supported beneath the rail means that the assembly can be connected to the track without having influence on or contacting the rail-to-sleeper fastening. For example, if equipment were mounted to track in a tunnel using a system which required the fastening of the rail to the sleeper to be removed and replaced, the signalling department responsible for fitting and wiring up the equipment to be mounted would need authorisation from the department responsible for the track, and from the tunnels department. Furthermore, it may be that a member of the department responsible for the track would need to be present during the mounting of equipment to actually fasten and unfasten the rail fastening. An assembly embodying the present invention can be mounted to the rail between the sleepers, so that the signalling department can carry out the mounting of the equipment without conflicting with the department responsible for the fastenings. This is desirable to the railway authorities.

In some rail systems the rails themselves carry electrical signals, and placing a metallic beam between two rails could lead to signalling conflicts. In an assembly embodying the present invention the beam is non-metallic. A material such as glass reinforced plastic can be used, which is strong, light, and ensures that any mounted equipment is electrically isolated from the rails themselves.

The provision of an integral anti-vibrational element between the beam and each of the rails reduces the stress on any equipment mounted to the beam. The anti-vibrational pads are intended to have a damping effect on vibrations being transmitted from the rails to the beam. The ability of the anti-vibrational pads to damp vibrations is increased by the provision of the further portions onto which the holding means bear. Damping vibrations in this way not only reduces stress on the mounted equipment, but also on the holding means, thereby improving the reliability of the mounting assembly.

According to an embodiment of the present invention, the first and second holding means each comprise gripping means and fastening means. The beam, each anti-vibrational pad, and each one of the gripping means are adapted to receive an associated one of the fastening means, and each of the first and second holding means are adapted so that when the fastening means thereof is received by the associated gripping means, an associated one of the anti-vibrational pads, and the beam, the gripping means is operable to clamp down onto an upper surface of the foot of the corresponding rail and the further portion of the associated anti-vibrational pad which lies between the gripping means and the beam. One holding means is provided for each rail, and ideally each holding means comprises a gripping means and a fastening means at each side of the rail. It may be that an assembly embodying the present invention has more or less than a gripping means and fastening means at each side of the rail, for example, it could be that in some embodiments gripping means and fastening means are only required on the outer side of the rail. Advantageously, the gripping means bears onto the anti-vibrational pad, and the fastening means connect the beam to the rail via the anti-vibrational pad and the gripping means, so that the damping effect of the anti-vibrational pad is greatly enhanced.

An important factor in designing an assembly for connection to rails is the weight of the assembly. Track staff are reluctant to use components which place significant stress or dynamic load on the foot of the rail. Preferably, in embodiments of the present invention, the beam is hollow. Hollow beams are both cheap and lightweight. The stress and dynamic load placed on the foot of the rail is significantly reduced by using a hollow beam. Furthermore, the convenience and ease of installation of a lighter beam will reduce installation time and associated costs.

When employing a hollow beam, or otherwise, it may be desirable to mount equipment to rail track using an assembly which further comprises a first and second mounting bracket, in which the beam is adapted to receive each of the first and second mounting brackets, and the first and second mounting brackets are adapted for mounting on the beam and receiving the fastening means within the beam so that the beam is strengthened against forces exerted via the fastening means. Even in the case that a hollow beam is not employed, the mounting bracket can reduce wear on the beam itself, by receiving the fastening means. Since the mounting brackets are likely to be cheaper and easier to replace than the beam itself, there are time and cost benefits of receiving the fastening means via a mounting bracket, rather than directly in the beam. One mounting bracket can be provided for each fastening means, and further mounting brackets can be used in the same way to receive any fasteners used to attach the equipment to the beam.

In preferred embodiments, the fastening means is a threaded fastener, and the mounting bracket is tapped to receive the threaded fastener. The additional advantage of providing tapped mounting brackets is that the beam itself does not have to be tapped. When in use, the beams are likely to be close to the ground, hence any metallic elements would be prone to rusting. In particular, threaded or tapped components can suffer from rust damage. The use of tapped mounting brackets removes the need to have any tapped holes in the beam whatsoever, thereby reducing susceptibility of the beam to rust damage. As stated above, replacing a mounting bracket is relatively cheap and easy as compared to replacing a beam. Wear on threaded and tapped components can also occur purely due to the load on the components as a result of the vibrations of the track, and the mass of the beam and mounted equipment. Again, it is preferable to have an easily replaceable component to suffer wear in this way than to wear down the beam itself.

Rails are often disposed at a slight cant, so that two parallel rails forming a track tilt towards one another. Throughout this description we use 'cant' in the sense that it describes an inclination of an individual rail relative to the line of the top of the sleeper.

Cant has an alternative usage describing the angle that the sleeper makes with the true horizontal, that usage is not employed in this description. In order that the beam can be supported substantially horizontally, and with the anti-vibrational pads held tightly between the beam and the foot of the rail to optimise support and damping, the anti-vibrational pads are adapted to accommodate a specific rail cant. Rail cants can vary depending on preferences of those responsible for laying and maintaining the track. However, a given section of track, or line of track, is likely to have the same cant throughout. Therefore it is practical to produce anti-vibrational pads to accommodate a specific cant. Advantageously, embodiments which incorporate anti-vibrational pads which are adapted to accommodate a specific cant are quick and easy to fit, since there is no need to adjust any parts to accommodate the cant. Reducing the number of adjustable parts also has benefits in terms of improving the life span of the assembly, and reducing the cost.

The beam and the anti-vibrational pads are held to the rail via the holding means. The fastening means effectively pull the beam and anti-vibrational pad up to the foot of the rail, for example, by having a threaded portion received by a tapped mounting bracket. The gripping means are secured between the anti-vibrational pad and a portion of the fastening means, and each of the gripping means comprises a clamping washer having a bottom surface with a serrated portion for gripping the upper surface of the foot of the rail. By having a portion which overlaps the upper surface of the foot of the rail, and a portion which does not, the gripping means effectively enable the assembly to hang from the rail. The serrated portion improves the gripping qualities of the gripping means, and ensures the assembly is held firmly in place relative to the beam. The gripping means are adapted to receive the fastening means, preferably the gripping means receive the fastening means in a position not overlapping the foot of the rail. The adaptation for receiving the fastening means is preferably a hole which is wide enough to receive a threaded portion of the fastening means, and narrow enough that a head portion of the fastening means cannot be received. In this way, when the assembly is in use, the head portion of the fastening means tightens against the gripping means to hold the assembly in place. Washers can be placed between the head portion of the fastening means and the gripping means, for example, a Nordlock anti-vibrational washer, or similar, could be used. Preferably, each of the gripping means has an oval hole for receiving the fastening means so that variation in rail width can be accommodated by the washer. Rail width can vary from track to track, but also at a given location due to temperature variation.

In order to improve the ability of the gripping means to grip the top surface of the foot of the rail, the serrated portion has teeth cut into its lower surface at two distinct angles: a first angle to match the top surface of the foot of the rail on a near side of the rail with respect to the other rail; and a second angle to match the top surface of the foot of the rail on a far side of the rail with respect to the other rail. Advantageously, providing serrated portions made in this way, the same gripping means can be used on either an inside or outside position of the rail, therefore reducing the number of different components required in the assembly.

Preferred features of the present invention will now be described, purely by way of example, with reference to the accompanying drawings, in which:-
Figure 1 is an overview of an assembly embodying the present invention;
Figure 2 is a side view of an assembly embodying the present invention;
Figure 3 is a detail view of part of an assembly embodying the present invention when held in place against a rail;
Figure 4 is an anti-vibrational pad of an embodiment of the present invention;
Figure 5 is a clamping washer of an embodiment of the present invention;
Figure 6 is a mounting bracket of an embodiment of the present invention; and
Figure 7 is an alternative mounting bracket of an embodiment of the present invention.

All measurements and particular angles provided in the description of embodiments are exemplary values provided for the purposes of illustrating a working embodiment of an assembly embodying the present invention. It should be understood that these values can be varied within limits that enable the components described herewith to perform the functions for which they are intended and which are described accordingly.

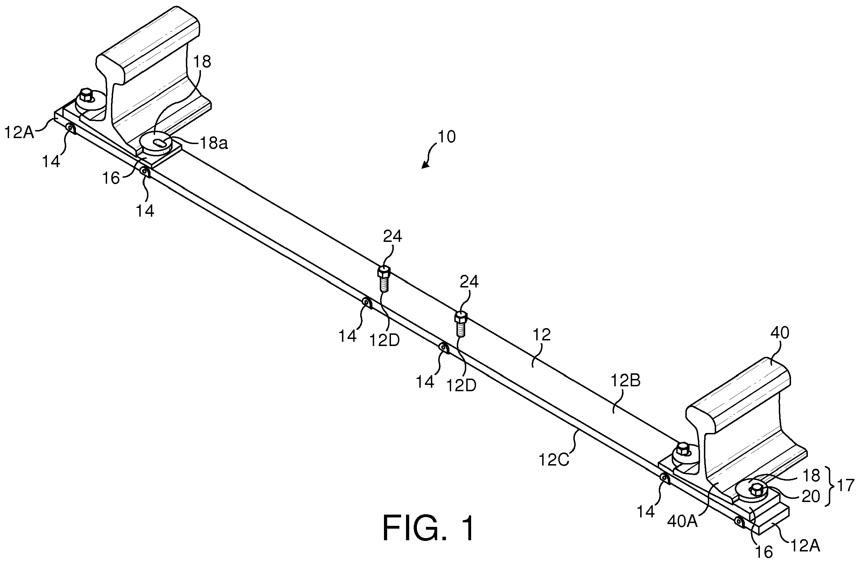

Figure 1 illustrates an assembly 10 embodying the present invention. In Figure 1 the assembly 10 is in place relative to two rails 40. The pictured rails 40 are disposed at a slight cant, so that they tilt inwards towards one another. A typical angle of cant is 1:20 or 2.86° for each rail 40. A beam 12 runs underneath both of the rails 40, and extends beyond the foot 40A of the rail 40 at either end. The beam 12 of the current embodiment is made of glass reinforced plastic, has cross sectional dimensions of 80mm x 20mm with a 5mm thick wall, and is 1.8m long. The extension 12A of the beam 12 beyond the foot 40A of the rail 40 enables a mounting bracket 14 to receive a beam-to-rail fastener 20 at a position outside the foot 40A of the rail 40. The beam 12 is pierced with six major holes 12D (not all visible in the Figures) over its length in three sets, the major holes 12D being open on the upper major surface 12B and lower major surface 12C of the beam 12. The middle set of major holes 12D is for the attachment of equipment, such as a balise, to the beam 12. The major holes 12D are adapted to receive respective mounting brackets 14, which in turn are adapted to receive equipment fastening means 24, such as a threaded fastener with a head portion. The spacing of the middle set of major holes 12D is adapted to match the spacing of holes in the equipment to be mounted. The exact number of major holes 12D in the beam 12 may vary depending on the equipment to be mounted, and the number and nature of the holding means 17. In the embodiment depicted in Figure 1, each set of holding means 17 comprises two clamping washers 18 and two beam-to-rail fasteners 20, although one of the clamping washers 18 is pictured without an accompanying beam-to-rail fastener 20 in place in order that the oval shape of a hole 18A provided in the clamping washer 18 for receiving the fastener 20 can be seen clearly. The beam 12 is adapted to receive a beam-to-rail fastener 20 into a bracket 14 at either side of each rail 40, hence there is a set of two major holes 12D toward either end of the beam 12. However, embodiments could use different numbers of clamping washers 18 and beam-to-rail fastening means 20 depending on factors such as weight of equipment, weight of beam 12, and susceptibility to vibration, amongst others. The number of major holes 12D required to attach the equipment will normally be two, but will depend on the particular piece of equipment to be mounted. A clamping washer 18 is an example of gripping means, and a beam-to-rail fastener 20 is an example of fastening means.

Each of the six major holes 12D are formed to accommodate the mounting brackets 14. In this embodiment, each major hole 12D comprises a 20mm hole in the lower face 12C of the beam 12, and a 14mm hole in the upper surface 12B of the beam 12 concentric with the hole in the lower face 12C. Here, the same mounting brackets 14 are used to mount the equipment to the beam 12 as are used to mount the beam 12 to the rail 40. This may vary depending on design considerations of particular embodiments, and it could even be that different mounting brackets 14 are used for some or each of the positions at which the beam 12 is mounted to the rail 40. The mounting brackets 14 are pushed up through the hole in the lower face 12C of the beam 12 so that they approach, or come into contact with, the underside of the upper face 12B of the beam 12. In exemplary embodiments, the mounting brackets 14 have a hole 14A running through them with a 14mm diameter to align with the major hole 12D in the beam 12.

An anti-vibrational pad 16 is pictured beneath each rail 40, between the beam 12 and the rail 40. The adaptation of the anti-vibrational pads 16 to accommodate the cant of the rails 40 can be seen in Figure 1, with the thickness of the pads 16 tapering towards the inside edge of the rail 40. In this way, the bottom surface 16B of each pad is substantially horizontal when in use, so the beam 12 can be held in position with its upper surface 12B flush against the bottom surface 16B of both the first and second anti-vibrational pads 16.

The anti-vibrational pads 16 extend beyond the foot 40A of the rail 40, and are adapted to receive the beam-to-rail fasteners (fastening means) 20. The anti-vibrational pads 16 are adapted so that they can be placed on the beam 12 in such a way that holes 16C in the pads 16 are coincident with major holes 12D in the beam 12. A clamping washer 18 is positioned so that its hole 18A is coincident with the hole 16C in the anti-vibrational pad 16 and a major hole 12D in the beam 12. A beam-to-rail fastener 20 can then be received by the clamping washer 18 and the pad 16, and engage with the mounting bracket 14. In the present embodiment, the beam-to-rail fastener 20 has a threaded portion, and the mounting bracket 14 is correspondingly tapped, so that as it is tightened, the beam-to-rail fastener 20 pulls the assembly together. When in use, the clamping washer 18 is positioned so that a portion of its lower face 18B overlaps and grips an upper surface of the foot 40A of the rail 40, and the assembly is held in position relative to the rail 40 as the beam-to-rail fastener 20 is tightened.

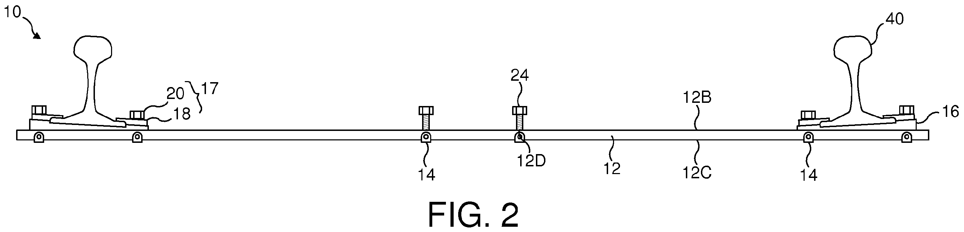

Figure 2 presents a side view of the assembly of Figure 1. Exemplary measurements and angles are provided. The angle of the cant of the rail 40 in Figure 2 is 3°, this is approximately typical of rail cants, although actual values vary depending on local standards. The gauge of the rail 40 in Figure 2 is 1436mm. Rail gauges vary from country to country, and even between railways within a given country. There is 190mm between the centres of the two holes forming a set of major holes 12D towards the end of the beam 12. This is wide enough to accommodate the foot 40A of the rail 40, and narrow enough that the clamping washers 18 can grip the upper surface of the foot 40A of the rail 40.

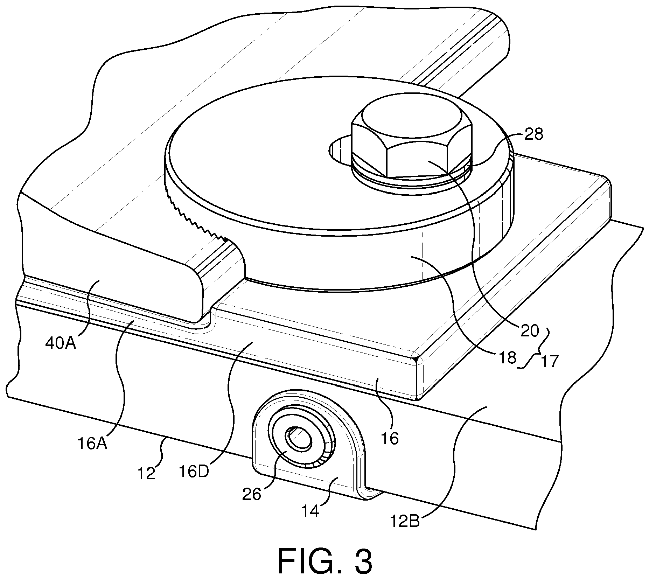

Figure 3 provides a detail view of holding means 17 and the region of the assembly 10 around the foot 40A of the rail when attached to a rail 40. Figure 3 illustrates a mounting bracket 14 that has been pop riveted onto the beam 12. In order to attach the mounting bracket 14 to the beam, the bracket 14 is clamped into position, and two minor holes are drilled on assembly through the fixing holes in the mounting bracket and into the side of the beam 12. The bracket 14 can then be pop riveted onto the beam 12, and the clamping force be removed. The bracket 14 is thus securely fixed in position.

The anti-vibrational pad 16 lies on the upper surface 12B of the beam 12 and has a portion 16A between the beam 12 and the rail 40, and a portion 16D, 16E between the clamping washer 18 and the beam 12. The hole 16C (not pictured in Figure 3) in the anti-vibrational pad 16 is placed above the hole 12D in the upper surface 12B of the beam 12 to receive the beam-to-rail fastening means 20. The portion 16A of the pad 16 for placement between the beam 12 and the rail 40 is depressed with respect to the rest of the pad 16 so that the base of the foot 40A of the rail 40 fits into a depression in the pad 16.

With the beam 12 and anti-vibrational pad 16 positioned against the rail 40 as in Figure 3, the clamping washer 18 can be positioned such that a portion 18B thereof overlaps the upper surface of the foot 40A of the rail 40, and a portion 18C bears onto the pad 16. A hole 18A in the clamping washer 18 aligns with a hole 16C in the pad 16 and a hole 12D in the beam 12. The clamping washer 18 is adapted to fit securely to the beam by having a recess 18D into which the upper surface of the foot 40A of the rail 40 can fit. The edge of the recess 18D aligns with the edge of the depression 16A in the anti-vibrational pad 16, so that the anti-vibrational pad 16 and the clamping washer 18 effectively form a c-shaped clamp about the foot 40A of the rail 40. This has the benefit of preventing lateral movement of the assembly with respect to the rail 40, particularly when the assembly 10 is clamped to the rail 40 in this way at either side of the foot 40A of the rail 40. The portion 18B of the clamping washer 18 positioned above the rail 40 has a serrated surface 18E to grip the rail 40 when the assembly 10 is secured in position.

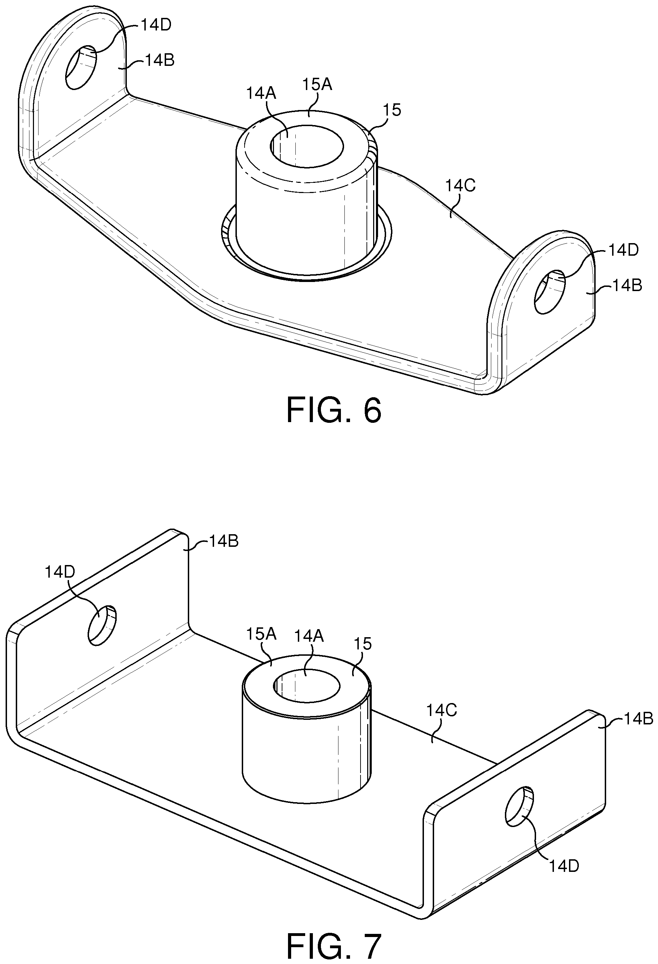

The mounting bracket 14 is held to the beam 12 by a pop rivet 26 in either side of the beam 12. The mounting bracket 14 features a central tubular portion 15 (see Figures 6 and 7) through which the hole 14A is formed. The tubular portion 15 protrudes upward from the base of the mounting bracket 14 when in place, and is received by the hole in the lower face 12C of the beam 12 so that the hole 14A through the tubular portion 15 aligns with the hole in the upper surface 12B of the beam 12, the hole 16C in the anti-vibrational pad 16, and the hole 18A in the clamping washer 18, to receive a beam-to-rail fastener 20. The diameter of the hole 14A in the tubular portion 15 approximately matches the diameter of the hole in the upper surface 12B of the beam 12, so that an upper surface 15A of the wall of the tubular portion 15 is against, or close to, the inner side of the upper surface 12B of the beam 12. The inner surface of the hole 14A in the tubular portion 15 is tapped, or internally threaded, so that when a beam-to-rail fastener 20, such as a threaded fastener, is in use, and received by the clamping washer 18, the anti-vibrational pad 16, and the beam 12, the fastener 20 pulls against the bracket 14. The pulling or clamping force is transmitted through the bracket 14 to the upper surface 12B of the beam 12 so that the beam is not crushed by the clamping force and the majority of the clamping force is withstood by the compressive strength of the upper surface 12B of the beam 12. Washers 28 can be used between the clamping washer 18 and the head of the beam-to-rail fastener 20 to have an anti-vibrational effect.

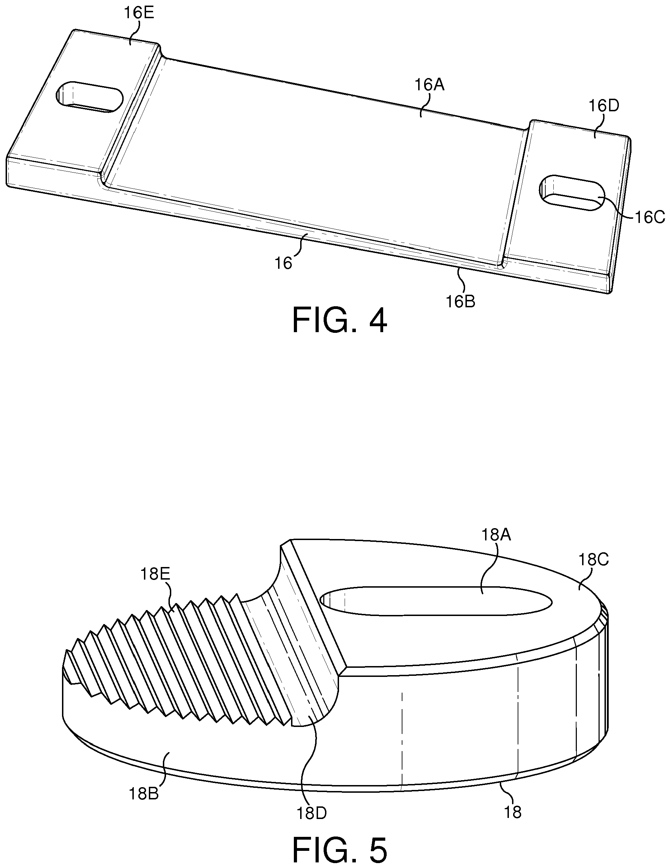

Figure 4 shows an anti-vibrational pad 16 forming part of an assembly 10 embodying the present invention. The anti-vibrational pad 16 is composed of rubber, but any material which, when used as part of an assembly 10 embodying the present invention, would have a damping effect on vibrations can be used. A central portion 16A of the pad 16 is depressed to receive the rail 40. Beyond either end of the central depressed portion 16A is a portion 16D, 16E of the pad 16 which is thicker than its respective end of the depressed portion 16A and the upper surfaces of the thicker portions 16D, 16E are therefore raised with respect to the depressed portion 16A. The thickness, and hence the height, of the pad 16 varies across the width of the depressed portion 16A to accommodate the rail cant. In each thicker portion 16D, 16E is a hole 16C, adapted to receive the beam-to-rail fastener 20. The oval shape of the hole 16C allows for variations in the width of the rail foot 40A to be accommodated. Variations in the width of a rail foot 40A could be due to variations in local standards, or could be due to physical factors such as thermal variation. The depressed portion 16A can be adapted so that it closely reflects the profile of the bottom surface of the rail foot 40A. This not only enhances the anti-vibrational effects of the pad 16, but also prevents any lateral movement of the pad 16 with respect to the rail 40.

Figure 5 shows a clamping washer 18 forming part of an assembly 10 embodying the present invention. The clamping washer 18 of Figure 5 is essentially a broad cylinder incorporating a recess. The recess gives rise to a thinner portion 18B, a surface 18E of which edges the recess, and is serrated for gripping the rail. When in use, the serrated surface 18E clamps down on an upper surface of the foot 40A of the rail 40 so that the serrated surface 18E is a bottom surface of the thinner portion 18B. Since the thinner portion 18B is adapted for clamping down on the rail 40 when in use, a hole 18A for receiving the beam-to-rail fastening means 20 runs through the thicker portion 18C of the washer 18. The inner corner of the recess has a curved edge 18D, which incorporates the foot 40A of the rail 40. When placed serrated-side down in use, the edge between the thinner portion 18B and thicker portion 18C of the washer 18 should approximately align with an edge of the depressed portion 16A of the anti-vibrational pad 16, so that the pad 16 and washer 18 effectively form a c-shaped clamp about the foot 40A of the rail 40.

Similarly to the anti-vibrational pad 16, the hole 18A in the clamping washer 18 for receiving the beam-to-rail fastening means 20 is oval-shaped. The hole passes through the thicker portion 18C of the washer 18. The oval shape allows for variations in the width of the rail foot 40A to be accommodated.

In embodiments of the present invention in which the holding means 17 comprise a clamping washer 18 and a beam-to-rail fastener 20 at both an inside position and an outside position of a canted rail 40, it may be desirable for the clamping washer 18 to be adapted so that the serrated surface 18E can strongly grip the upper surface 12B of the foot 40A of the rail 40, regardless of whether the particular washer 18 is used on the inside or the outside position. In the present embodiment, surfaces of the thicker portions of the anti-vibrational pad 16 onto which the clamping washer 18 bears are both substantially horizontal, and the top surface of the foot 40A of the rail 40 at the outer edges onto which the washer would clamp are at an angle α relative to the bottom surface of the foot 40A of the rail. Therefore, when the anti vibrational pad 16 is in place underneath the rail 40 and the rail is disposed at an angle of cant β, the angles of the top surfaces of the foot 40A of the rail at the outer edges relative to the substantially horizontal top surfaces of the pad 16, are α+β at one side, and α-β at the other. Since the clamping washer 18 when in use bears onto the substantially horizontal top surface of the thicker portions of the pad 16, the same difference in angles of surfaces of the washer 18 relative to angles of surfaces of the foot 40A of the rail exists between the inside and outside rail positions. The serrated surface 18E of the clamping washer 18 has teeth cut into the clamping surface at two distinct angles to ensure that some of the teeth match the angle of the top surface of the foot 40A of the rail at an inside position of the rail 40, and some match the angle of the top surface of the foot 40A of the rail at an outside position of the rail 40.

The beam-to-rail fastener 20 can be a screw having a threaded portion which engages with an internally threaded, or tapped, tubular portion of the mounting bracket 14, and a head portion, which is wider than the threaded portion so that when the assembly is in place on the rail, the wider head portion is not received by the hole in the clamping washer 18, and the clamping washer 18, the anti-vibrational pad 16, the beam 12, and the mounting bracket 14, are held in place against the foot 40A of the rail 40. Some embodiments incorporate further washers between the head portion of the beam-to-rail fastening means 20 and the clamping washer 18. These further washers may be adapted to enhance the anti-vibrational properties of the assembly 10.

Figures 6 and 7 illustrate cast and fabricated constructions of a mounting bracket 14, respectively. The mounting brackets 14 both feature side portions 14B at either end of the bracket, joined by a base portion 14C, and have a tubular portion 15 protruding from the base portion 14C. Stainless steel would be a suitable material for manufacturing a mounting bracket, having good resistance to rust, and good compressive strength. The skilled person will appreciate that many alternative materials exist. Each end portion has a fixing hole 14D which aligns with a minor hole in the side of the beam 12 to enable the bracket 14 to be pop riveted to the beam 12. The tubular portion 15 of the bracket 14 is received by a hole in the lower face 12C of the beam 12, and an upper surface 15A of the wall of the tubular portion 15 thus approaches or contacts the inside of the upper surface 12B of the beam 12. The upper surface 12B of the beam 12 has a hole smaller in diameter than the hole in the lower face 12C of the beam 12, and approximately equal in diameter with the hole 14A through the tubular portion 15 of the bracket 14. The hole 14A through the tubular portion 15 of the mounting bracket 14 is tapped (not pictured) to enable the beam-to-rail fastener 20, or equipment fastening means 24, to pull on the mounting bracket 14. It is this pulling force that effectively holds the assembly 10 together. In embodiments of the present invention mounting brackets 14 may be used to receive a beam-to-rail fastener 20, but equally may be used to receive equipment fastening means 24.

## Claims

1. An equipment mounting assembly (10) for mounting equipment to rail track, the rail track having first and second rails (40) to which the equipment is to be mounted, the rails (40) running parallel to one another and being supported on rail foundations, the assembly (10) comprising:
a beam (12) for connection to both rails (40), to which beam (12) the equipment can be mounted; and
first and second holding means (17) for holding the beam (12) in position relative to the rails, the first and second holding means (17) being configured to support the beam (12) beneath the rails (40) in an arrangement in which the beam (12) resides in a space between two adjacent rail foundations;
**characterised in that** the beam (12) is non-metallic and the assembly (10) further comprises first and second anti-vibrational pads (16) for placement between the beam 12 and the rail (40) and location at each end of the beam (12), each of the first and second anti-vibrational pads (16) having a portion (16A), which is depressed with respect to the rest of the pad (16), and further portions (16D, 16E) which extend beyond the edges of the foot (40A) of the corresponding rail (40) when the pad (16) is in position beneath the rail (40) so that, in use, the depressed portion (16A) of the pad (16) lies between an upper face (12B) of the beam (12) and a foot (40A) of a corresponding one of the rails (40), and each of the holding means (17) is adapted to bear onto an associated one of the anti-vibrational pads (16).

2. The assembly according to claim 1, wherein
the first and second holding means (17) each comprise gripping means (18) and fastening means (20);
the beam (12), each anti-vibrational pad (16), and each one of the gripping means (18) are adapted to receive an associated one of the fastening means (20); and
each of the first and second holding means (17) are adapted so that when the fastening means (20) thereof is received by the associated gripping means (18), an associated one of the anti-vibrational pads (16), and the beam (12), the gripping means (18) is operable to clamp down onto an upper surface of the foot (40A) of the corresponding rail (40) and the further portion of the associated anti-vibrational pad (16) which lies between the gripping means (18) and the beam (12).

3. The assembly according to claim 1 or 2, wherein the beam (12) is hollow.

4. The assembly according to claim 2, or claim 3 when appended to claim 2, further comprising a first and a second mounting bracket (14), wherein
the beam (12) is adapted to receive each of the first and second mounting brackets (14); and
the first and second mounting brackets (14) are adapted for mounting on the beam (12) and receiving the fastening means (20) within the beam (12) so that the beam (12) is strengthened against forces exerted via the fastening means (20).

5. The assembly according to claim 2 or 4, or claim 3 when appended to claim 2, wherein the fastening means (20) is a threaded fastener, and the mounting bracket (14) is tapped to receive the threaded fastener.

6. The assembly according to any preceding claim, wherein the thickness of each anti-vibrational pad (16) tapers such that the anti-vibrational pad (16) is adapted to accommodate a specific rail cant.

7. The assembly according to any one of claims 2 to 6, wherein each of the gripping means (18) comprises a clamping washer having a bottom surface with a serrated portion (18E) for gripping the upper surface of the foot (40A) of the rail (40).

8. The assembly according to any one of claims 2 to 7, wherein each of the gripping means (18) has an oval hole (18A) for receiving the fastening means (20) so that variation in rail width can be accommodated by the gripping means (18).

9. The assembly according to claim 7, or claim 8 when read as appended to claim 7, wherein the serrated portion (18E) has teeth cut into its lower surface at two distinct angles:
a first angle to match the top surface of the foot (40A) of the rail (40) on a near side of the rail with respect to the other rail; and
a second angle to match the top surface of the foot (40A) of the rail (40) on a far side of the rail with respect to the other rail.

## Patentansprüche

1. Ausrüstungsmontageanordnung (10) zum Montieren einer Ausrüstung an einem Schienenstrang, wobei der Schienenstrang eine erste und eine zweite Schiene (40) aufweist, an denen die Ausrüstung zu montieren ist, wobei die Schienen (40) parallel zueinander verlaufen und von Schienenunterlagen gestützt werden, wobei die Anordnung (10) Folgendes umfasst:
einen Träger (12) zum Verbinden mit beiden Schienen (40), wobei die Ausrüstung am Träger (12) montiert werden kann; und
ein erstes und ein zweites Haltemittel (17) zum Halten des Trägers (12) in Position relativ zu den Schienen, wobei das erste und das zweite Haltemittel (17) dazu ausgelegt sind, den Träger (12) unter den Schienen (40) in einem Aufbau zu stützen, bei dem sich der Träger (12) in einem Raum zwischen zwei benachbarten Schienenunterlagen befindet;
**dadurch gekennzeichnet, dass** der Träger (12) nichtmetallisch ist und die Anordnung (10) ferner eine erste und eine zweite Antivibrationsplatte (16) zum Platzieren zwischen dem Träger (12) und der Schiene (40) und Standort an jedem Ende des Trägers (12) umfasst, wobei jede der ersten und der zweiten Antivibrationsplatte (16) einen Abschnitt (16A), der mit Bezug auf den Rest der Platte (16) heruntergedrückt ist, und weitere Abschnitte (16D, 16E), die sich über die Kanten des Fußes (40A) der entsprechenden Schiene (40) hinaus erstrecken, wenn sich die Platte (16) unter der Schiene (40) in Position befindet, aufweist, derart, dass der heruntergedrückte Abschnitt (16A) der Platte (16) im Gebrauch zwischen einer oberen Fläche (12B) des Trägers (12) und einem Fuß (40A) einer entsprechenden der Schienen (40) liegt, und jedes der Haltemittel (17) angepasst ist, auf einer zugehörigen der Antivibrationsplatten (16) aufzuliegen.

2. Anordnung nach Anspruch 1, wobei
das erste und das zweite Haltemittel (17) jeweils Greifmittel (18) und Befestigungsmittel (20) umfasst;
der Träger (12), jede Antivibrationsplatte (16) und jedes der Greifmittel (18) angepasst sind, ein zugehöriges der Befestigungsmittel (20) aufzunehmen; und
jedes des ersten und des zweiten Haltemittels (17) derart angepasst ist, dass, wenn das Befestigungsmittel (20) davon vom zugehörigen Greifmittel (18), einer zugehörigen der Antivibrationsplatten (16) und dem Träger (12) aufgenommen ist, das Greifmittel (18) betreibbar ist, auf eine obere Fläche des Fußes (40A) der entsprechenden Schiene (40) und den weiteren Abschnitt der zugehörigen Antivibrationsplatte (16), der zwischen dem Greifmittel (18) und dem Träger (12) liegt, geklemmt zu werden.

3. Anordnung nach Anspruch 1 oder 2, wobei der Träger (12) hohl ist.

4. Anordnung nach Anspruch 2 oder Anspruch 3, wenn an Anspruch 2 angehängt, die ferner eine erste und eine zweite Montagehalterung (14) umfasst, wobei
der Träger (12) angepasst ist, jede der ersten und der zweiten Montagehalterung (14) aufzunehmen; und
die erste und die zweite Montagehalterung (14) zum Montieren an den Träger (12) und zum Aufnehmen des Befestigungsmittels (20) im Träger (12) angepasst sind, derart, dass der Träger (12) gegenüber Kräften, die via die Befestigungsmittel (20) ausgeübt werden, verstärkt ist.

5. Anordnung nach Anspruch 2 oder 4 oder Anspruch 3, wenn an Anspruch 2 angehängt, wobei das Befestigungsmittel (20) ein Gewindebefestigungselement ist und die Montagehalterung (14) ein Innengewinde zum Aufnehmen des Gewindebefestigungselements aufweist.

6. Anordnung nach einem der vorhergehenden Ansprüche, wobei sich die Dicke jeder Antivibrationsplatte (16) derart verjüngt, dass die Antivibrationsplatte (16) angepasst ist, sich an eine spezifische Schienenschräge anzugleichen.

7. Anordnung nach einem der Ansprüche 2 bis 6, wobei jedes der Greifmittel (18) eine Klemmscheibe umfasst, die eine untere Fläche mit einem gezahnten Abschnitt (18E) zum Greifen der oberen Fläche des Fußes (40A) der Schiene (40) aufweist.

8. Anordnung nach einem der Ansprüche 2 bis 7, wobei jedes der Greifmittel (18) ein ovales Loch (18A) zum Aufnehmen des Befestigungsmittels (20) aufweist, derart, dass sich das Greifmittel (18) an eine Variation der Schienenbreite angleichen kann.

9. Anordnung nach Anspruch 7 oder Anspruch 8, wenn wie an Anspruch 7 angehängt gelesen, wobei der gezahnte Abschnitt (18E) Zähne aufweist, die in zwei eindeutigen Winkeln in seine untere Fläche geschnitten sind:
einem ersten Winkel zur Übereinstimmung mit der oberen Fläche des Fußes (40A) der Schiene (40) auf einer nahen Seite der Schiene mit Bezug auf die andere Schiene und
einem zweiten Winkel zur Übereinstimmung mit der oberen Fläche des Fußes (40A) der Schiene (40) auf einer fernen Seite der Schiene mit Bezug auf die andere Schiene.

## Revendications

1. Ensemble de montage d'équipement (10) pour monter un équipement sur une voie ferrée, la voie ferrée ayant des premier et second rails (40) sur lesquels l'équipement doit être monté, les rails (40) s'étendant parallèlement l'un à l'autre et étant supportés sur des fondations de rail, l'ensemble (10) comprenant :
une poutre (12) destinée à être connectée aux deux rails (40), poutre (12) sur laquelle l'équipement peut être monté ; et
des premier et second moyens de maintien (17) pour maintenir la poutre (12) en position par rapport aux rails, les premier et second moyens de maintien (17) étant configurés pour supporter la poutre (12) sous les rails (40) dans un agencement dans lequel la poutre (12) réside dans un espace situé entre deux fondations de rail adjacentes ;
**caractérisé en ce que** la poutre (12) est non métallique et **en ce que** l'ensemble (10) comprend en outre des premier et second patins anti-vibration (16) destinés à être placés entre la poutre (12) et le rail (40) et à être localisés à chaque extrémité de la poutre (12), chacun des premier et second patins anti-vibration (16) ayant une partie (16A) qui est enfoncée par rapport au reste du patin (16), et des parties supplémentaires (16D, 16E) qui s'étendent au-delà des bords du pied (40A) du rail correspondant (40) lorsque le patin (16) est en position sous le rail (40), de sorte qu'en utilisation, la partie enfoncée (16A) du patin (16) se trouve entre une face supérieure (12B) de la poutre (12) et un pied (40A) de l'un correspondant des rails (40), et chacun des moyens de maintien (17) est adapté pour venir en appui sur l'un associé des patins anti-vibration (16).

2. Ensemble selon la revendication 1, dans lequel
les premier et second moyens de maintien (17) comprennent chacun un moyen de préhension (18) et un moyen de fixation (20) ;
la poutre (12), chaque patin anti-vibration (16) et chacun des moyens de préhension (18) sont adaptés pour recevoir un associé des moyens de fixation (20) ; et
chacun des premier et second moyens de maintien (17) est adapté pour que lorsque son moyen de fixation (20) est reçu par le moyen de préhension associé (18), un associé des patins anti-vibration (16) et la poutre (12), le moyen de préhension (18) peut être utilisé pour serrer sur une surface supérieure du pied (40A) du rail correspondant (40) et sur la partie supplémentaire du patin anti-vibration associé (16) qui se situe entre les moyens de préhension (18) et la poutre (12).

3. Ensemble selon la revendication 1 ou 2, dans lequel la poutre (12) est creuse.

4. Ensemble selon la revendication 2 ou la revendication 3 lorsqu'elle est annexée à la revendication 2, comprenant en outre des premier et second supports de montage (14), dans lequel
la poutre (12) est adaptée pour recevoir chacun des premier et second supports de montage (14) ; et
les premier et second supports de montage (14) sont adaptés pour être montés sur la poutre (12) et recevoir les moyens de fixation (20) à l'intérieur de la poutre (12) de sorte que la poutre (12) soit renforcée contre des forces exercées via les moyens de fixation (20).

5. Ensemble selon la revendication 2 ou 4, ou la revendication 3 lorsqu'elle est annexée à la revendication 2, dans lequel le moyen de fixation (20) est une fixation filetée, et le support de montage (14) est taraudé pour recevoir la fixation filetée.

6. Ensemble selon l'une quelconque des revendications précédentes, dans lequel l'épaisseur de chaque patin anti-vibration (16) diminue de telle sorte que le patin anti-vibration (16) est adapté pour recevoir une inclinaison de rail spécifique.

7. Ensemble selon l'une quelconque des revendications 2 à 6, dans lequel chacun des moyens de préhension (18) comprend une rondelle de serrage ayant une surface inférieure avec une partie dentelée (18E) pour saisir la surface supérieure du pied (40A) du rail (40).

8. Ensemble selon l'une quelconque des revendications 2 à 7, dans lequel chacun des moyens de préhension (18) comporte un trou ovale (18A) destiné à recevoir le moyen de fixation (20) de sorte qu'une variation de largeur de rail peut être compensée par le moyen de préhension (18).

9. Ensemble selon la revendication 7, ou la revendication 8 lorsque lue comme annexée à la revendication 7, dans lequel la partie dentelée (18E) a des dents découpées dans sa surface inférieure sur deux angles distincts :
un premier angle pour correspondre à la surface supérieure du pied (40A) du rail (40) sur un côté proche du rail par rapport à l'autre rail ; et
un second angle pour apparier la surface supérieure du pied (40A) du rail (40) sur un côté éloigné du rail par rapport à l'autre rail.
